# FASCICULE DE BREVET EUROPEEN

(11) **EP 2 992 293 B1**
(45) Date de publication et mention de la délivrance du brevet: **07.06.2017**
(21) Numéro de dépôt: 14729393.0
(22) Date de dépôt: 25.04.2014
(51) Int. Cl.: F41H 5/02, F41H 5/22, F41H 7/04

(54) **VÉHICULE ÉQUIPÉ D'UN DISPOSITIF DE PROTECTION D'OUVRANT ASSURANT UNE OPTIMISATION DU GABARIT D'OUVERTURE**
FAHRZEUG MIT EINER VORRICHTUNG ZUM SCHUTZ VON ÖFFNUNGSELEMENTEN, WELCHE DEN ÖFFNUNGSSPIELRAUM OPTIMIERT
VEHICLE EQUIPPED WITH A DEVICE FOR PROTECTING OPENING ELEMENTS WHICH OPTIMIZES THE OPENING CLEARANCE

(30) Priorité: 29.04.2013 FR 1300994
(43) Date de publication de la demande: 09.03.2016
(73) Titulaire: NEXTER Systems, 42328 Roanne Cedex (FR)
(72) Inventeur: BELLOCHE, Jérôme, F-18023 Bourges Cedex (FR); DERSOIR, Patrick, F-18023 Bourges Cedex (FR); VANDENBERG, Christophe, F-18023 Bourges Cedex (FR)
(74) Mandataire: Cabinet Chaillot
(86) Numéro de dépôt international: PCT/FR2014/051003
(87) Numéro de publication internationale: WO 2014/177795

(56) Documents cités:
- EP-A1- 1 837 234
- EP-A1- 2 463 613
- EP-A1- 2 573 501
- FR-A1- 2 958 738

## Description

Le domaine technique de la présente invention est celui des dispositifs de protection de véhicules, notamment blindés, vis-à-vis de projectiles balistiques, notamment de projectiles à charge creuse tels que les roquettes (RPG).

La protection des véhicules blindés vis-à-vis de projectiles consiste, le plus souvent, à installer tout autour du véhicule un dispositif de protection comprenant un élément de protection balistique espacé de la structure du véhicule et généralement constitué de grilles, de filets ou d'autres dispositifs ajourés dont la taille de maille est destinée à détruire ou neutraliser l'amorçage du projectile.

Le principe de fonctionnement de ce type de protection, dite passive, nécessite d'éloigner l'élément de protection à environ 300 mm, plus généralement entre 200 et 400 mm, de la structure du véhicule. L'intégration d'un tel dispositif de protection passive doit par ailleurs être faite de manière à ne pas interférer avec les fonctionnalités de base du véhicule, les ouvrants devant en particulier rester fonctionnels.

Les véhicules sont généralement équipés d'un ouvrant, notamment arrière, fermant une ouverture et articulé au véhicule de façon à constituer une rampe d'accès au véhicule dans sa position entièrement ouverte.

Lorsque l'on souhaite protéger un tel ouvrant, on se heurte au problème suivant lequel l'angle d'ouverture maximal de l'ouvrant est réduit du fait de la présence de l'élément de protection qui entrera en contact avec le sol si aucun moyen pour limiter l'angle d'ouverture n'est prévu, lequel contact avec le sol est susceptible de détériorer l'élément de protection et donc de rendre inopérant le dispositif de protection.

Afin de résoudre ce problème, il a été proposé, dans la demande de brevet français FR 2 958 738, un dispositif de protection comprenant des moyens de liaison et d'écartement disposés entre l'élément de protection et l'ouvrant, les moyens de liaison permettant leur rapprochement lors de l'ouverture de l'ouvrant et les moyens d'écartement permettant leur éloignement lors de la fermeture de l'ouvrant. De cette manière, l'élément de protection peut être positionné à une distance nominale lorsque l'ouvrant est fermé et peut être rapproché de l'ouvrant lors de son ouverture afin d'être suffisamment éloigné du sol pour éviter sa détérioration, tout en permettant d'augmenter l'angle d'ouverture maximal de l'ouvrant.

Dans ce dispositif de protection, l'élément de protection est porté uniquement par l'ouvrant, le rapprochement de l'élément de protection et de l'ouvrant est assuré par des ressorts et l'éloignement de l'élément de protection et de l'ouvrant est provoqué par l'appui d'entretoises contre une partie fixe du véhicule, autour de l'ouverture fermée par l'ouvrant.

Bien que ce dispositif de protection résolve de manière satisfaisante le problème mentionné ci-dessus, il présente l'inconvénient d'avoir une structure relativement complexe impliquant un nombre conséquent de pièces et un assemblage minutieux, ce qui conduit à une augmentation relative des coûts de fabrication.

Il existe donc un besoin pour un dispositif de protection ayant une structure plus simple, optimisée industriellement et de coût inférieur, tout en permettant un rapprochement et un écartement automatiques de l'élément de protection vis-à-vis de l'ouvrant lors respectivement de l'ouverture et de la fermeture de celui-ci.

La présente invention vise à satisfaire ce besoin en proposant un dispositif de protection avec lequel l'élément de protection est relié à l'ouvrant en formant une structure à parallélogramme(s) déformable(s) dont la déformation est commandée automatiquement lors de l'ouverture et de la fermeture de l'ouvrant.

L'utilisation d'au moins un parallélogramme déformable non seulement permet de résoudre le problème mentionné ci-dessus, mais encore d'obtenir un mouvement progressif, sans à-coups, de l'élément de protection vis-à-vis de l'ouvrant.

La présente invention a donc pour objet un véhicule comprenant un ouvrant articulé en partie basse d'une ouverture du véhicule de façon à pouvoir pivoter autour d'un axe horizontal et constituer, dans sa position entièrement ouverte, une rampe facilitant l'accès à l'intérieur du véhicule, le véhicule étant équipé d'un dispositif de protection balistique d'ouvrant comprenant un élément de protection balistique en regard de l'ouvrant et relié à ce dernier par l'intermédiaire de moyens de rapprochement et d'écartement automatiques de l'élément de protection et de l'ouvrant lors respectivement de l'ouverture et de la fermeture de l'ouvrant, caractérisé par le fait que lesdits moyens de rapprochement et d'écartement comprennent :
- au moins un bras de liaison supérieur et au moins un bras de liaison inférieur articulés d'une part à l'élément de protection et d'autre part à l'ouvrant, respectivement en partie haute et en partie basse, les bras de liaison supérieur(s) et inférieur(s) étant de même longueur et disposés de telle sorte que le plan moyen de l'ouvrant et le plan moyen de l'élément de protection peuvent être rapprochés et écartés tout en restant parallèles l'un à l'autre, et
- au moins un bras d'actionnement, articulé d'une part à l'au moins un bras de liaison inférieur et d'autre part à une partie fixe du véhicule, autour de ladite ouverture, de manière à commander, lors d'un pivotement de l'ouvrant, par action sur l'au moins un bras de liaison inférieur, le déplacement de l'élément de protection par rapport à l'ouvrant,
chaque articulation précitée autorisant une rotation relative autour d'un axe horizontal et parallèle à l'axe de pivotement de l'ouvrant et les longueurs des bras de liaison et d'actionnement étant fixes.

L'au moins un bras de liaison inférieur peut être formé par une tige, les trois points d'articulation étant alors alignés selon la direction longitudinale du bras.

De préférence, les trois points d'articulation de l'au moins un bras de liaison inférieur sont disposés aux trois sommets d'un triangle, le point d'articulation entre l'au moins un bras de liaison inférieur et l'au moins un bras d'actionnement se situant, en position fermée de l'ouvrant, au-dessous du point d'articulation entre l'au moins un bras de liaison inférieur et l'élément de protection. L'au moins un bras de liaison inférieur peut ainsi se présenter sous la forme d'une plaque triangulaire. Il est également possible d'utiliser comme bras de liaison inférieur un élément en forme de T, dont la barre verticale (fût du T) est plus petite que la barre horizontale (tête du T), les points d'articulation à l'ouvrant et à l'élément de protection étant prévus aux deux extrémités de la barre horizontale tandis que le troisième point d'articulation est prévu à l'extrémité libre de la barre verticale de l'élément en T.

Selon un mode de réalisation particulier, les moyens de rapprochement et d'écartement comprennent au moins une paire de bras de liaison supérieur et inférieur. Les bras de liaison supérieur et inférieur d'une même paire de bras de liaison peuvent être ou ne pas être dans un même plan vertical ou dans des plans verticaux immédiatement adjacents.

Avantageusement, l'axe de pivotement de l'articulation reliant l'au moins un bras d'actionnement et la partie fixe du véhicule se situe au-dessus de l'axe de pivotement de l'ouvrant et côté arrière du véhicule par rapport à un plan vertical qui passe par l'axe de pivotement de l'ouvrant.

Le véhicule selon la présente invention peut comprendre deux bras de liaison inférieurs chacun articulé au voisinage d'un bord de l'ouvrant et à chacun desquels est articulé un bras d'actionnement.

Selon un mode de réalisation particulier, en position fermée de l'ouvrant, chaque bras de liaison est perpendiculaire ou sensiblement perpendiculaire à l'ouvrant.

Avec un tel agencement, non seulement la résistance fournie par les bras de liaison en cas d'impact est maximale, mais encore, pour une distance nominale donnée entre l'élément de protection et l'ouvrant dans la position fermée, la distance entre l'élément de protection et l'ouvrant dans la position entièrement ouverte peut être rendue minimale, notamment du fait que le pivotement de l'ouvrant de sa position fermée à sa position entièrement ouverte amène l'élément de protection, par l'intermédiaire du au moins un bras d'actionnement, à se rapprocher de l'ouvrant tout au long du pivotement de l'ouvrant, et à s'écarter de l'ouvrant tout au long du pivotement de ce dernier de sa position entièrement ouverte à sa position fermée.

Le véhicule selon la présente invention peut comprendre au moins une chape à laquelle est articulé, de préférence de manière amovible, l'au moins un bras d'actionnement.

L'au moins une chape peut être spécifique à l'articulation d'un bras d'actionnement ou servir à la fixation de moyens de remorquage en vue du remorquage du véhicule.

En effet, on peut souligner ici qu'articuler de manière amovible l'au moins un bras d'actionnement à l'au moins une chape permet, après avoir détaché du véhicule les bras d'actionnement, de remonter l'élément de protection vis-à-vis de l'ouvrant et ainsi de libérer l'au moins une chape pour la fixation de moyens de remorquage du véhicule tout en dégageant très largement l'accès à l'au moins une chape, notamment pour rendre maximaux les angles supérieur et inférieur de traction sur l'au moins une chape.

Sont avantageusement prévus des moyens pour maintenir l'élément de protection dans une position, dite remontée, dans laquelle l'au moins un bras d'actionnement est détaché de l'au moins une chape de remorquage et l'élément de protection a été déplacé vers le haut avec pivotement de l'au moins un bras de liaison supérieur de façon à dégager un accès à ladite au moins une chape de remorquage pour permettre le remorquage du véhicule.

De tels moyens peuvent par exemple être une ou plusieurs goupilles cavaliers associées chacune à une chape solidaire de la partie fixe arrière du véhicule et recevant un bras de liaison pour assurer son immobilisation dans la position remontée.

Selon des caractéristiques particulières facultatives, l'ouvrant est formé par un panneau composé d'une première partie articulée au véhicule et d'une seconde partie articulée à la première partie et constituant une porte pouvant s'ouvrir alors que l'ouvrant est fermé, et l'élément de protection est composé d'une première partie reliée à ladite première partie de l'ouvrant par les moyens de rapprochement et d'écartement automatiques, et d'une seconde partie en regard de la porte et articulée à la première partie de l'élément de protection de façon à autoriser un pivotement de la seconde partie par rapport à la première partie autour d'un axe de pivotement parallèle à l'axe de pivotement de la seconde partie de l'ouvrant. Le pivotement de la porte n'est donc pas empêché par l'élément de protection et le dispositif de protection ne condamne donc pas la porte.

La présente invention a également pour objet un dispositif de protection balistique d'ouvrant pour un véhicule, le dispositif comprenant un élément de protection balistique destiné à être positionné en regard d'un ouvrant du véhicule ayant un axe de pivotement horizontal, et des moyens destinés à permettre le rapprochement et l'écartement automatiques de l'élément de protection et de l'ouvrant lors respectivement de l'ouverture et de la fermeture de l'ouvrant, moyens de rapprochement et d'écartement qui sont aussi destinés à relier l'élément de protection balistique et le véhicule et l'ouvrant, dispositif caractérisé par le fait que lesdits moyens de rapprochement et d'écartement comprennent :
- au moins un bras de liaison supérieur et au moins un bras de liaison inférieur articulés à l'élément de protection et destinés à être articulés à l'ouvrant, respectivement en partie haute et en partie basse, les bras de liaison supérieur(s) et inférieur(s) étant de même longueur et disposés de telle sorte que, après montage, le plan moyen de l'élément de protection puisse être rapproché et écarté du plan moyen de l'ouvrant tout en restant parallèles à lui, et
- au moins un bras d'actionnement, articulé à l'au moins un bras de liaison inférieur et destiné à être articulé à une partie fixe du véhicule, autour de ladite ouverture, de manière à commander, lors d'un pivotement de l'ouvrant, par action sur l'au moins un bras de liaison inférieur, le déplacement de l'élément de protection par rapport à l'ouvrant,
chaque articulation précitée autorisant après montage une rotation relative autour d'un axe horizontal et parallèle à l'axe de pivotement de l'ouvrant et les longueurs des bras de liaison et d'actionnement étant fixes.

Pour mieux illustrer l'objet de la présente invention, on va en décrire ci-après un mode de réalisation particulier avec référence au dessin annexé.

Sur ce dessin :
- la Figure 1 est une vue de l'arrière d'un véhicule blindé équipé d'un dispositif de protection selon un mode de réalisation particulier de la présente invention ;
- la Figure 2 est une vue latérale externe de l'arrière du véhicule de la Figure 1, l'ouvrant étant en position fermé et l'élément de protection étant espacé de ce dernier de la distance nominale ;
- les Figures 3 et 4 sont des vues de détail de la Figure 2, montrant respectivement la région basse et haute du dispositif de protection ;
- les Figures 5 et 6 sont des vues de côté représentant l'ouvrant en position respectivement entrouverte et entièrement ouverte, la distance entre l'élément de protection et l'ouvrant étant respectivement réduite et minimale ;
- la Figure 7 est une vue de détail de la Figure 6, montrant la région basse du dispositif de protection ; et
- la Figure 8 est une vue de côté de l'arrière du véhicule blindé, l'ouvrant étant fermé et l'élément de protection étant dans sa position remontée pour permettre le remorquage du véhicule.

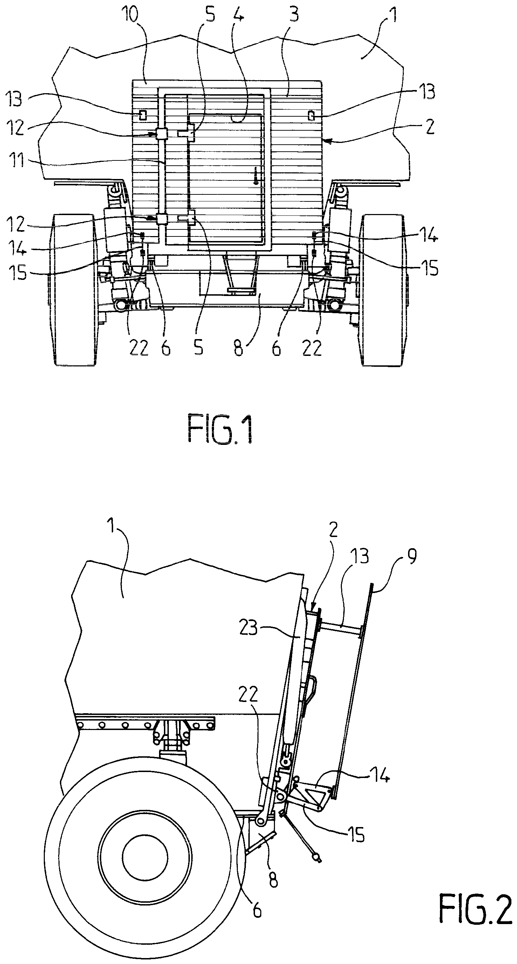

Si l'on se réfère à la Figure 1, on peut voir que l'on y a représenté l'arrière d'un véhicule 1 dans lequel est formée une ouverture d'accès au véhicule 1 fermée par un ouvrant 2 se présentant sous la forme d'un panneau composé d'une première partie 3 définie par la région périphérique de l'ouvrant 2 et d'une seconde partie 4 constituant une porte au centre de l'ouvrant 2 et articulée en 5 à ladite première partie 3 de façon à pouvoir s'ouvrir ou se fermer alors que la première partie 3 reste immobile. La première partie 3 est articulée au véhicule en 6, sous ladite ouverture d'accès et selon un axe de pivotement horizontal, de telle sorte que l'ouvrant 2 peut pivoter entre une position fermée, dans laquelle il ferme l'ouverture d'accès, et une position ouverte, dans laquelle il est entièrement ouvert et constitue une rampe d'accès au véhicule, avec la porte 4 maintenue dans sa position fermée.

L'ouvrant 2 décrit ci-dessus et son montage sur un tel véhicule 1 sont bien connus.

Un bouclier arrière 8 est disposé au-dessous de l'ouvrant 2 et comprend une surface inférieure inclinée qui est tournée vers le bas et vers l'extérieur du véhicule 1.

La protection de l'ouvrant 2 est assurée par un dispositif de protection comprenant un élément de protection balistique 9 qui dans le mode de réalisation particulier représenté est une grille formée de barres métalliques parallèles et solidaires d'un cadre.

L'élément de protection 9 est en particulier composé d'une première partie 10 périphérique et d'une seconde partie 11 en regard de la porte 4 et articulée en 12 à la première partie 10 selon un axe de pivotement parallèle à celui de la porte 4, de telle sorte que ladite seconde partie 11 peut pivoter par rapport à ladite première partie 10 lors de l'ouverture et de la fermeture de la porte 4 alors que la première partie 3 de l'ouvrant 2 reste dans la position fermée, évitant ainsi de condamner la porte 4.

Si l'on se réfère également à la Figure 2, on peut voir que le dispositif de protection comprend également deux bras de liaison supérieurs 13, deux bras de liaison inférieurs 14 et un ou deux bras d'actionnement 15.

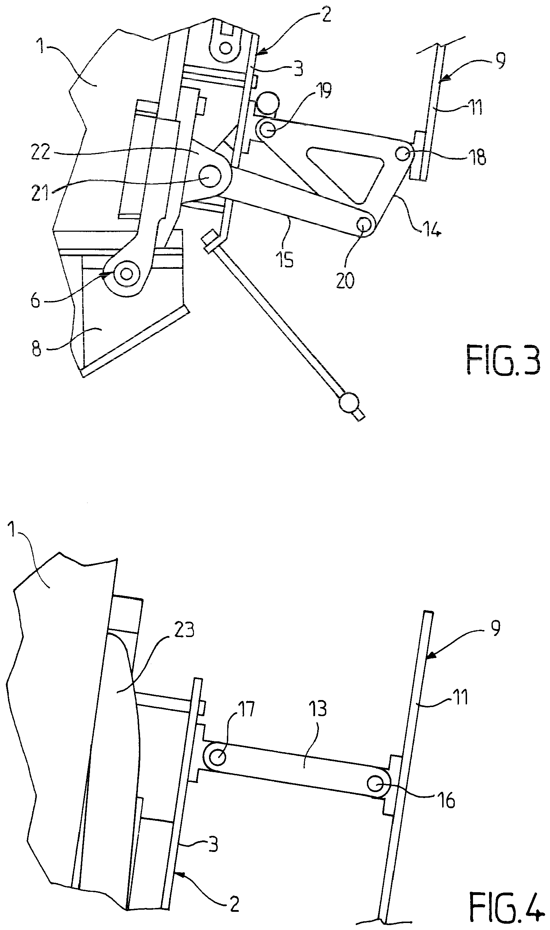

Si l'on se réfère également à la Figure 4, on peut voir que les bras de liaison supérieurs 13 sont des barres reliées, au niveau d'une première extrémité, à l'élément de protection 9, en partie haute de celui-ci et sur son côté tourné vers l'ouvrant 2, par une liaison pivot 16, et, au niveau de l'extrémité opposée, à l'ouvrant 2, en partie haute de celui-ci, et en particulier à la première partie 3 de l'ouvrant 2, par une liaison pivot 17.

Si l'on se réfère maintenant aux Figures 1, 2 et 3, on peut voir que les bras de liaison inférieurs 14 sont des plaques triangulaires reliées, au niveau d'un premier sommet, à l'élément de protection 9, en partie basse de celui-ci et sur son côté tourné vers l'ouvrant 2, par une liaison pivot 18, et, au niveau d'un second sommet, à la première partie 3 de l'ouvrant 2, en partie basse de celle-ci, par une liaison pivot 19.

Comme on peut mieux le voir sur la Figure 1, les deux bras de liaison supérieurs 13 et les deux bras de liaison inférieurs 14 sont placés chacun dans l'une des deux régions d'angle respectivement supérieurs et inférieurs de l'ouvrant 2.

Toujours si l'on se réfère aux Figures 1, 2 et 3, on peut voir que chaque bras d'actionnement 15 est une barre reliée, au niveau d'une première extrémité, au troisième sommet d'un bras de liaison inférieur 14 par une liaison pivot 20, et, au niveau de l'extrémité opposée, à une chape de remorquage 22 du véhicule 1 par une liaison pivot 21, laquelle chape de remorquage 22 est portée par la paroi du véhicule 1 entourant l'ouverture fermée par l'ouvrant 2, et est donc fixe.

Toutes les liaisons pivots 16, 17, 18, 19, 20 et 21 sont d'axe horizontal et transversal à la direction longitudinale du véhicule 1, et sont à tout moment parallèles à l'axe de pivotement de l'ouvrant 2 par rapport au véhicule 1.

La droite passant par les liaisons pivots 16 et 17 des bras de liaison supérieurs 13 est parallèle à la droite passant par les liaisons pivots 18 et 19 des bras de liaison inférieurs 14.

Les liaisons pivots 21 de chaque bras d'actionnement 15 sont amovibles, en ce sens qu'elles permettent à chaque bras d'actionnement 15 d'être détachés de l'ouvrant 2 et éventuellement de l'élément de protection 9.

Les bras de liaison inférieurs 14 et les bras de liaison supérieurs 15 sont sensiblement de même longueur et sont disposés de telle sorte que les plans moyens de l'ouvrant 2 et de l'élément de protection 9 sont parallèles.

Par conséquent, chaque bras de liaison supérieur 13 forme, avec un bras de liaison inférieur 14 correspondant, une paire de bras de liaison, et chaque paire de bras de liaison forme, conjointement avec l'élément de protection 9 et l'ouvrant 2, une structure à parallélogramme déformable dont la déformation est commandée par un bras d'actionnement 15. Ainsi, dans le mode de réalisation représenté, est formée une structure à deux parallélogrammes déformables.

On va maintenant décrire avec référence aux Figures 2, 5, 6 et 7 la manière dont l'élément de protection 9 est automatiquement rapproché et écarté de l'ouvrant 2 lors respectivement de l'ouverture et de la fermeture de l'ouvrant 2, tout en restant parallèle à ce dernier.

Si l'on se réfère tout d'abord à la Figure 2, on peut voir que lorsque l'ouvrant 2 est dans la position fermée, l'élément de protection 9 est parallèle à l'ouvrant 2 et espacé de ce dernier de la distance nominale (distance maximale), par exemple de 300 mm.

Dans le mode de réalisation représenté, les bras d'actionnement 15 et les bras de liaison supérieurs 13 et inférieurs 14 sont agencés pour que, en position fermée de l'ouvrant 2, les bras de liaison supérieurs 13 et le côté reliant les premier et second sommets de chacun des bras de liaison inférieurs 14 soient perpendiculaires au plan moyen de l'ouvrant 2 et au plan moyen de l'élément de protection 9.

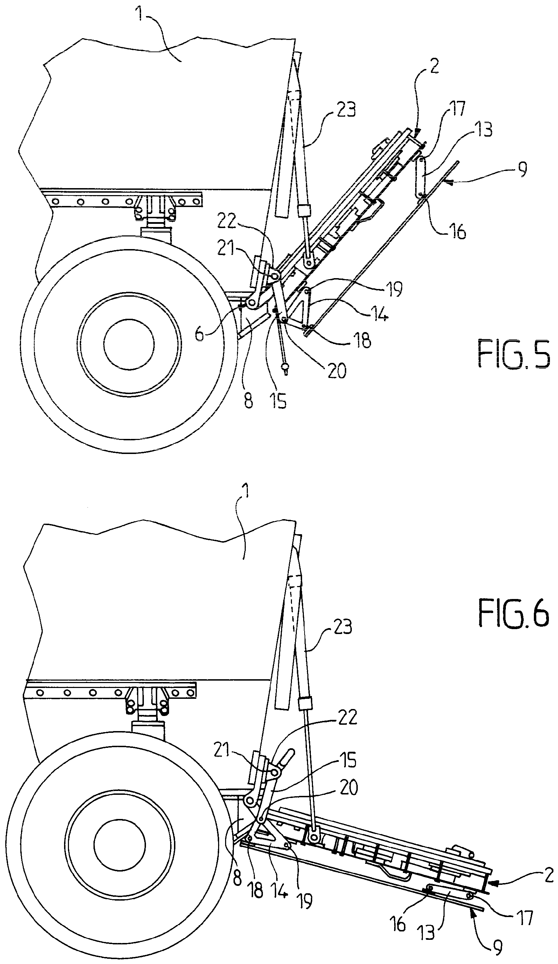

Si l'on se réfère à la Figure 5, on peut voir que, après que l'ouvrant 2 a été amené à pivoter autour de son articulation 6 sous l'action de deux vérins 23, du fait qu'ils sont de longueur fixe, les bras d'actionnement 15 sont amenés à simultanément pivoter vers le bas autour de l'axe de leur liaison pivot 21 et faire tourner les bras de liaison inférieurs 14 vers le bas autour de leur liaison pivot 19 par traction au niveau de leur troisième sommet, ce qui fait simultanément tourner les bras de liaison supérieurs 13 vers le bas, de sorte que l'élément de protection 9 est rapproché de l'ouvrant 2 tout en se décalant vers le bas relativement à celui-ci.

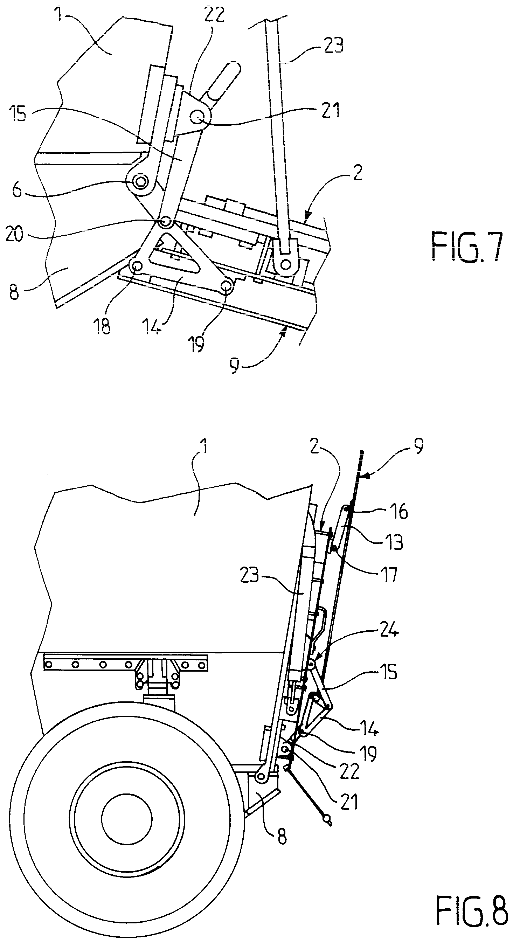

Ce rapprochement de l'élément de protection 9 se poursuit durant tout le mouvement d'ouverture de l'ouvrant 2 jusqu'à sa position entièrement ouvert, représentée sur les Figures 6 et 7, dans laquelle l'élément de protection 9 est à distance minimale de l'ouvrant 2.

On souligne ici que, du fait que les liaisons pivots 21 se situent au-dessus de l'axe de pivotement de l'ouvrant 2 et côté arrière du véhicule 1 par rapport à un plan vertical qui passe par l'axe de pivotement de l'ouvrant 2 et est transversal à la ligne longitudinale moyenne du véhicule 1, les bras d'actionnement 15, en fin de pivotement de l'ouvrant 2 vers sa position entièrement ouvert, exerceront, non plus sur les bras de liaison inférieurs 14 une traction vers le bas, mais une traction vers le haut, ce qui fait remonter l'élément de protection 9 et à la fois l'éloigne du sol, pour éviter sa détérioration, et le rapproche de l'ouvrant 2, permettant un angle maximal d'ouverture.

Si l'on se réfère en particulier à la Figure 7 on peut voir en outre que la cinématique du dispositif de protection, en particulier les longueurs et positions des différents bras 14 et 15, permet d'éviter que l'élément de protection 9 vienne interférer avec le bouclier arrière 8.

Le mouvement inverse de l'élément de protection 9 vis-à-vis de l'ouvrant 2 a lieu lorsque l'ouvrant 2 pivote de sa position entièrement ouverte à sa position fermée, l'élément de protection 9 s'écartant jusqu'à la distance nominale, comme représenté sur la Figure 1.

On constate donc que, dans le mode de réalisation particulier, la distance nominale est égale à la longueur des bras de liaison supérieurs 13 et inférieurs 14.

Comme mentionné ci-dessus, les bras d'actionnement 15 peuvent être détachés de la chape de remorquage 22, ce qui permet d'une part de libérer la chape de remorquage 22 pour la fixation de moyens de remorquage du véhicule, et d'autre part de faire monter l'élément de protection 9 par rotation des bras de liaison supérieurs 13 vers le haut, ce qui permet de dégager un large accès à la chape de remorquage 22, comme représenté sur la Figure 8.

L'élément de protection sera alors fixé à une chape solidaire de la partie fixe arrière du véhicule ou bien de l'ouvrant (chape non représentée). La fixation sera assurée par exemple par un moyen de liaison temporaire tel une goupille cavalier. On a représenté sur la Figure 8 le bras d'actionnement 15 qui est ainsi attaché à une chape 24 fixée à la paroi arrière du véhicule au-dessus de l'articulation 19. Cette fixation temporaire permet le maintien de l'élément de protection en position remontée.

Il est bien entendu que le mode de réalisation particulier qui vient d'être décrit, ainsi que sa variante, ont été donné à titre indicatif et non limitatif et que des modifications peuvent être apportées sans que l'on s'écarte pour autant du cadre de la présente invention tel que défini par les revendications.

## Revendications

1. Véhicule (1) comprenant un ouvrant (2) articulé en partie basse d'une ouverture du véhicule (1) de façon à pouvoir pivoter autour d'un axe horizontal et constituer, dans sa position entièrement ouverte, une rampe facilitant l'accès à l'intérieur du véhicule (1), le véhicule (1) étant équipé d'un dispositif de protection balistique d'ouvrant comprenant un élément (9) de protection balistique en regard de l'ouvrant (2) et relié à ce dernier par l'intermédiaire de moyens de rapprochement et d'écartement automatiques de l'élément de protection (9) et de l'ouvrant (2) lors respectivement de l'ouverture et de la fermeture de l'ouvrant (2), **caractérisé par le fait que** lesdits moyens de rapprochement et d'écartement comprennent :
- au moins un bras de liaison supérieur (13) et au moins un bras de liaison inférieur (14) articulés d'une part à l'élément de protection (9) et d'autre part à l'ouvrant (2), respectivement en partie haute et en partie basse, les bras de liaison supérieur(s) (13) et inférieur(s) (14) étant de même longueur et disposés de telle sorte que le plan moyen de l'ouvrant (2) et le plan moyen de l'élément de protection (9) peuvent être rapprochés et écartés tout en restant parallèles l'un à l'autre, et
- au moins un bras d'actionnement (15), articulé d'une part à l'au moins un bras de liaison inférieur (14) et d'autre part à une partie fixe du véhicule (2), autour de ladite ouverture, de manière à commander, lors d'un pivotement de l'ouvrant (2), par action sur l'au moins un bras de liaison inférieur (14), le déplacement de l'élément de protection (9) par rapport à l'ouvrant (2),
chaque articulation précitée autorisant une rotation relative autour d'un axe horizontal et parallèle à l'axe de pivotement de l'ouvrant (2) et les longueurs des bras de liaison (13, 14) et d'actionnement (15) étant fixes.

2. Véhicule (1) selon la revendication 1, **caractérisé par le fait que** les trois points d'articulation de l'au moins un bras de liaison inférieur (14) sont disposés aux trois sommets d'un triangle, le point d'articulation entre l'au moins un bras de liaison inférieur (14) et l'au moins un bras d'actionnement (15) se situant, en position fermée de l'ouvrant (2), au-dessous du point d'articulation entre l'au moins un bras de liaison inférieur (14) et l'élément de protection (9).

3. Véhicule (1) selon l'une des revendications 1 et 2, **caractérisé par le fait que** l'axe de pivotement de l'articulation reliant l'au moins un bras d'actionnement (15) et la partie fixe du véhicule (1) se situe au-dessus de l'axe de pivotement de l'ouvrant (2) et côté arrière du véhicule (1) par rapport à un plan vertical qui passe par l'axe de pivotement de l'ouvrant (2).

4. Véhicule (1) selon l'une des revendications 1 à 3, **caractérisé par le fait qu'**il comprend deux bras de liaison inférieurs (14) chacun articulé au voisinage d'un bord de l'ouvrant (2) et à chacun desquels est articulé un bras d'actionnement (15).

5. Véhicule (1) selon l'une des revendications 1 à 4, **caractérisé par le fait qu'**en position fermée de l'ouvrant (2), chaque bras de liaison (13, 14) est perpendiculaire ou sensiblement perpendiculaire à l'ouvrant (2).

6. Véhicule (1) selon l'une des revendications 1 à 5, **caractérisé par le fait qu'**il comprend au moins une chape (22) à laquelle est articulé, de préférence de manière amovible, l'au moins un bras d'actionnement (15).

7. Véhicule (1) selon la revendication 6, **caractérisé par le fait que** sont prévus des moyens pour maintenir l'élément de protection (9) dans une position, dite remontée, dans laquelle l'au moins un bras d'actionnement (15) est détaché de l'au moins une chape (22) et l'élément de protection (9) a été déplacé vers le haut avec pivotement de l'au moins un bras de liaison supérieur (13) de façon à dégager un accès à ladite au moins une chape (22) pour permettre le remorquage du véhicule (1).

8. Véhicule (1) selon l'une des revendications 1 à 7, **caractérisé par le fait que** l'ouvrant (2) est formé par un panneau composé d'une première partie (3) articulée au véhicule (1) et d'une seconde partie (4) articulée à la première partie (3) et constituant une porte pouvant s'ouvrir alors que l'ouvrant (2) est fermé, et que l'élément de protection (9) est composé d'une première partie (10) reliée à ladite première partie (3) de l'ouvrant (2) par les moyens de rapprochement et d'écartement automatiques, et d'une seconde partie (11) en regard de la porte et articulée à la première partie (10) de l'élément de protection (9) de façon à autoriser un pivotement de la seconde partie (11) par rapport à la première partie (10) autour d'un axe de pivotement parallèle à l'axe de pivotement de la seconde partie (4) de l'ouvrant (2).

9. Dispositif de protection balistique d'ouvrant (2) pour un véhicule (1), le dispositif comprenant un élément (9) de protection balistique destiné à être positionné en regard d'un ouvrant (2) du véhicule ayant un axe de pivotement horizontal, et des moyens destinés à permettre le rapprochement et l'écartement automatiques de l'élément de protection (9) et de l'ouvrant (2) lors respectivement de l'ouverture et de la fermeture de l'ouvrant (2), moyens de rapprochement et d'écartement qui sont aussi destinés à relier l'élément de protection balistique et le véhicule et l'ouvrant, dispositif **caractérisé par le fait que** lesdits moyens de rapprochement et d'écartement comprennent :
- au moins un bras de liaison supérieur (13) et au moins un bras de liaison inférieur (14) articulés à l'élément de protection (9) et destinés à être articulés à l'ouvrant (2), respectivement en partie haute et en partie basse, les bras de liaison supérieur(s) (13) et inférieur(s) (14) étant de même longueur et disposés de telle sorte que, après montage, le plan moyen de l'élément de protection (9) puisse être rapproché et écarté du plan moyen de l'ouvrant (2) tout en restant parallèles à lui, et
- au moins un bras d'actionnement (15), articulé à l'au moins un bras de liaison inférieur (14) et destiné à être articulé à une partie fixe du véhicule (2), autour de ladite ouverture, de manière à commander, lors d'un pivotement de l'ouvrant (2), par action sur l'au moins un bras de liaison inférieur (14), le déplacement de l'élément de protection (9) par rapport à l'ouvrant (2),
chaque articulation précitée autorisant après montage une rotation relative autour d'un axe horizontal et parallèle à l'axe de pivotement de l'ouvrant et les longueurs des bras de liaison (13, 14) et d'actionnement (15) étant fixes.

## Patentansprüche

1. Fahrzeug (1) mit einem Öffnungselement (2), das im unteren Teil einer Öffnung des Fahrzeugs (1) angelenkt ist, um um eine waagrechte Achse zu rotieren und, in ganz geöffneter Position, eine Rampe zu bilden, die den Zugang zum Innern des Fahrzeugs (1) erleichtert, wobei das Fahrzeug (1) mit einer ballistischen Schutzvorrichtung für das Öffnungselement ausgestattet ist, die ein Element (9) von ballistischem Schutz gegenüber dem Öffnungselement (2) umfasst, das mit letzterem mittels automatischer Annäherungs- und Entfernungsmittel des Schutzelements (9) und des Öffnungselements (2) verbunden ist, bei Öffnung bzw. Schließung des Öffnungselements (2), **gekennzeichnet dadurch, dass** die Annäherungs- und Entfernungsmittel folgendes umfassen:
- mindestens einen oberen Verbindungsarm (13) und mindestens einen unteren Verbindungsarm (14), die einerseits an dem Schutzelement (9) und andererseits an dem Öffnungselement (2) angelenkt sind, am oberen bzw. am unteren Teil, wobei der/die obere(n) Verbindungsarm(e) (13) und untere(n) (14) dieselbe Länge haben und derart angeordnet sind, dass die Mittelebene des Öffnungselements (2) und die Mittelebene des Schutzelements (9) angenähert und abgerückt werden können und doch parallel zueinander bleiben, und
- mindestens einen Antriebsarm (15), der einerseits an dem mindestens einen unteren Verbindungsarm (14) angelenkt ist und andererseits an einem festen Teil des Fahrzeugs (2), um besagte Öffnung herum, um bei einer Drehung des Öffnungselements (2) durch Einwirkung auf den mindestens einen unteren Verbindungsarm (14) die Bewegung des Schutzelements (9) im Vergleich zu dem Öffnungselement (2) zu steuern,
wobei jedes vorgenannte Gelenk eine relative Rotation um eine waagrechte Achse und parallel zur Drehachse des Öffnungselements (2) gestattet und die Längen der Verbindungs- (13, 14) und Antriebsarme (15) fest sind.

2. Fahrzeug (1) nach Anspruch 1, **gekennzeichnet dadurch, dass** die drei Gelenkpunkte des mindestens einen unteren Verbindungsarms (14) an den drei Spitzen eines Dreiecks angeordnet sind, wobei der Gelenkpunkt zwischen dem mindestens einen unteren Verbindungsarm (14) und dem mindestens einen Antriebsarm (15) bei geschlossener Position des Öffnungselements (2) unterhalb des Gelenkpunktes zwischen dem mindestens einen unteren Verbindungsarm (14) und dem Schutzelement (9) liegt.

3. Fahrzeug (1) nach einem der Ansprüche 1 und 2, **gekennzeichnet dadurch, dass** die Drehachse des Gelenks, das den mindestens einen Antriebsarm (15) mit dem festen Teil des Fahrzeugs (1) verbindet, über der Drehachse des Öffnungselements (2) liegt und an der hinteren Seite des Fahrzeugs (1) im Vergleich zu einer vertikale Ebene, die die Drehachse des Öffnungselements (2) durchquert.

4. Fahrzeug (1) nach einem der Ansprüche 1 bis 3, **gekennzeichnet dadurch, dass** es zwei untere Verbindungsarme umfasst (14), die jeweils in der Nähe eines Rands des Öffnungselements (2) angelenkt sind, und an denen jeweils ein Antriebsarm (15) angelenkt ist.

5. Fahrzeug (1) nach einem der Ansprüche 1 bis 4, **gekennzeichnet dadurch, dass** in geschlossener Position des Öffnungselements (2) jeder Verbindungsarm (13, 14) senkrecht oder im wesentlichen senkrecht zu dem Öffnungselement (2) ist.

6. Fahrzeug (1) nach einem der Ansprüche 1 bis 5, **gekennzeichnet dadurch, dass** es mindestens eine Abdeckung (22) umfasst, an der, vorzugsweise lösbar, der mindestens eine Antriebsarm (15) angelenkt ist.

7. Fahrzeug (1) nach Anspruch 6, **gekennzeichnet dadurch, dass** Mittel vorgesehen sind, um das Schutzelement (9) in einer Position zu halten, die Aufstieg genannt wird, in der der mindestens eine Antriebsarm (15) von der mindestens einer Abdeckung (22) abgetrennt wird und das Schutzelement (9) nach oben verschoben wurde, mit Drehung des mindestens einen oberen Verbindungsarms (13), um einen Zugang zu der mindestens einen Abdeckung (22) freizulegen, um das Abschleppen des Fahrzeugs (1) zu gestatten.

8. Fahrzeug (1) nach einem der Ansprüche 1 bis 7, **gekennzeichnet dadurch, dass** das Öffnungselement (2) von einer Platte gebildet wird, bestehend aus einem ersten Teil (3), das am Fahrzeug (1) angelenkt ist, und einem zweiten Teil (4), das an dem ersten Teil (3) angelenkt ist, die eine Tür bildet, die sich öffnen kann, während das Öffnungselement (2) verschlossen ist, sowie dadurch, dass das Schutzelement (9) aus einem ersten Teil (10) besteht, das mit besagtem ersten Teil (3) des Öffnungselements (2) durch die automatischen Annäherungs- und Entfernungsmittel verbunden ist, und einem zweite Teil (11) gegenüber der Tür, das an dem ersten Teil (10) des Schutzelements (9) angelenkt ist, um eine Drehung des zweiten Teils (11) in Bezug auf das erste Teil (10) um eine Drehachse parallel zur Drehachse des zweiten Teils (4) des Öffnungselements (2) zu gestatten.

9. Ballistische Schutzvorrichtung für ein Öffnungselement (2) für ein Fahrzeug (1), die ein Element (9) zum ballistischen Schutz umfasst, das gegenüber einem Öffnungselement (2) des Fahrzeugs mit einer waagrechten Drehachse liegt, und Mittel zur automatischen Annäherung und Entfernung des Schutzelements (9) und des Öffnungselements (2) bei Öffnung bzw. Schließung des Öffnungselements (2), wobei die Annäherungs- und Entfernungsmittel auch das ballistische Schutzelement und das Fahrzeug und das Öffnungselement verbinden, wobei die Vorrichtung **dadurch gekennzeichnet ist, dass** die Annäherungs- und Entfernungsmittel folgendes umfassen:
- mindestens einen oberen Verbindungsarm (13) und mindestens einen unteren Verbindungsarm (14), die an das Schutzelement (9) angelenkt sind und dazu bestimmt sind, an dem Öffnungselement (2) angelenkt zu sein, am oberen bzw. am unteren Teil, wobei der/die obere(n) (13) und untere(n) (14) Verbindungsarm(e) dieselbe Länge haben und derart angeordnet sind, dass nach der Montage die Mittelebene des Schutzelements (9) an die Mittelebene des Öffnungselements (2) angenähert und von ihr abgerückt werden kann, wobei sie parallel zu ihr bleibt, sowie
- mindestens einen Antriebsarm (15), der an dem mindestens einen unteren Verbindungsarm (14) angelenkt und dazu bestimmt ist, an ein festes Teil des Fahrzeugs (2) angelenkt zu sein, um besagte Öffnung herum, um bei Drehung des Öffnungselements (2), durch Einwirkung auf den mindestens einen unteren Verbindungsarm (14), die Bewegung des Schutzelements (9) im Vergleich zu dem Öffnungselement (2) zu steuern,
wobei jedes vorgenannte Gelenk nach der Montage eine relative Rotation um eine waagrechte Achse und parallel zur Drehachse des Öffnungselements gestattet und die Längen der Verbindungs- (13, 14) und Antriebsarme (15) fest sind.

## Claims

1. A vehicle (1) comprising a door (2) hinged at the bottom part of an opening of the vehicle (1) for being able to pivot around a horizontal axis and to constitute, in its entirely open position, a ramp facilitating the access to the interior of the vehicle (1), the vehicle (1) being equipped with a ballistic protection device for a door having a ballistic protection element (9) facing the door (2) and connected to the latter via means for automatically bringing closer and spacing apart the protection element (9) and the door (2) when opening and closing the door (2), respectively, **characterised by** the fact that said means for bringing closer and spacing apart comprise:
- at least one upper connecting arm (13) and at least one lower connecting arm (14) hinged to the protection element (9) and to the door (2) at their top part and their bottom part, respectively, the upper (13) and lower (14) connecting arms having the same length and being arranged such that the average plane of the door (2) and the average plane of the protection element (9) can be brought closer to and spaced apart from each other, while remaining parallel to each other, and
- at least one actuating arm (15) hinged on one hand to the at least one lower connecting arm (14) and, on the other hand, to a fixed part (2) of the vehicle, around said opening, so as to control, when pivoting the door (2), by action on the at least one lower connecting arm (14), the displacement of the protection element (9) with respect to the door (2),
each aforesaid hinge allowing a relative rotation around a horizontal axis which is parallel to the pivot axis of the door (2), and the lengths of the actuating (15) and connecting arms (13, 14) being fixed.

2. The vehicle (1) according to claim 1, **characterised by** the fact that the three hinge points of the at least one lower connecting arm (14) are arranged at the three vertices of a triangle, the hinge point between the at least one lower connecting arm (14) and the at least one actuating arm (15) being located, in a closed position of the door (2), below the hinge point between the at least one lower connecting arm (14) and the protection element (9).

3. The vehicle (1) according to one of claims 1 and 2, **characterised by** the fact that the pivot axis of the hinge connecting the at least one actuating arm (15) and the fixed part of the vehicle (1) is above the pivot axis of the door (2) and on the rear side of the vehicle (1) with respect to a vertical plane which passes by the pivot axis of the door (2).

4. The vehicle (1) according to one of claims 1 to 3, **characterised by** the fact it comprises two lower connecting arms (14), each being hinged in the vicinity of an edge of the door (2), and to each of which an actuating arm (15) is hinged.

5. The vehicle (1) according to one of claims 1 to 4, **characterised by** the fact, in the closed position of the door (2), each connecting arm (13, 14) is perpendicular or substantially perpendicular to the door (2).

6. The vehicle (1) according to one of claims 1 to 5, **characterised by** the fact that it comprises at least one yoke (22) to which the at least one actuating arm (15) is hinged, preferably removably hinged.

7. The vehicle (1) according to claim 6, **characterised by** the fact that there are means for holding the protection element (9) in a position, called raised position, in which the at least one actuating arm (15) is separated from the at least one yoke (22) and the protection element (9) has been moved upwards by pivoting the at least one upper connecting arm (13) so as to clear an access to said at least one yoke (22) to allow the vehicle (1) to be towed.

8. The vehicle (1) according to one of claims 1 to 7, **characterised by** the fact that the door (2) is formed by a panel having a first part (3) hinged to the vehicle (1) and a second part (4) hinged to the first part (3) and constituting a hatch which can open while the door (2) is closed, and in that the protection element (9) is composed of a first part (10) connected to said first part (3) of the door (2) by the means for automatically bringing closer and spacing apart, and of a second part (11) facing the hatch and hinged to the first part (10) of the protection element (9) so as to allow the second part (11) to pivot with respect to the first part (10) around a pivot axis parallel to the pivot axis of the second part (4) of the door (2).

9. A ballistic protection device for a door (2) of a vehicle (1), the device comprising a ballistic protection element (9) to be positioned facing a door (2) of the vehicle having a horizontal pivot axis, and means for allowing the protection element (9) and the door (2) to be automatically brought closer and spaced apart when opening and closing the door (2), respectively, the means for bringing closer and spacing apart being also intended to connect the ballistic protection element and the vehicle and the door, the device being **characterised by** the fact that said means for bringing closer and spacing apart comprise:
- at least one upper connecting arm (13) and at least one lower connecting arm (14) hinged to the protection element (9) and intended to be hinged to the door (2), at their top part and their bottom part, respectively, the upper (13) and lower (14) connecting arms having the same length and being arranged such that, once mounted, the average plane of the protection element (9) can be brought closer to and spaced apart from the average plane of the door (2), while remaining parallel thereto, and
- at least one actuating arm (15) hinged to the at least one lower connecting arm (14) and intended to be hinged to a fixed part (2) of the vehicle, around said opening, so as to control, when pivoting the door (2), by action on the at least one lower connecting arm (14), the displacement of the protection element (9) with respect to the door (2),
each aforesaid hinge allowing, once mounted, a relative rotation around an axis horizontal and parallel to the pivot axis of the door, and the lengths of the actuating (15) and connecting (13, 14) arms being fixed.
